# EUROPEAN PATENT SPECIFICATION

(11) **EP 1 621 376 B1**
(45) Date of publication and mention of the grant of the patent: **28.05.2008**
(21) Application number: 05015090.3
(22) Date of filing: 12.07.2005
(51) Int. Cl.: B60H 1/00, B60H 1/32

(54) **Refrigerant relief device**
Kältemittelentlastungsanlage
Dispositif de décharge de frigorigène

(30) Priority: 26.07.2004 JP 2004216757
(43) Date of publication of application: 01.02.2006
(73) Proprietor: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(56) References cited:
- EP-A- 1 580 051
- EP-A- 1 584 506
- US-A- 4 948 931
- US-A- 5 153 396
- US-A1- 2005 061 010

## Description

The invention relates to a refrigerant relief device according to the preamble of claim 1.

The compressor of a typical automotive air conditioner compresses refrigerant and discharges the compressed refrigerant into a high pressure line between a discharge chamber and e.g. the expansion device. Pressure in this high pressure line sometimes becomes abnormally high e.g. when the amount of charged refrigerant is large, or when the compressor is operating with the maximum capacity due to high cooling load. The abnormally high pressure can cause a rupture of the condenser or the receiver/dryer. To solve this problem, a pressure sensor on the discharge side of the compressor detects abnormally high pressure, and initiates a control operation, such as stoppage of the operation of the compressor, to prevent rupture of components in the high pressure line.

A refrigerant relief device is known (JP 2002-257047 A) which is mounted in the compressor to prevent discharge pressure from becoming equal to or higher than a predetermined value. A valve element is urged in valve-closing direction by a spring while the valve element is urged in valve-opening direction by pressure from the discharge chamber. When the discharge pressure exceeds the urging force of the spring the discharge pressure escapes to the atmosphere. When the discharge pressure then drops below the predetermined value, the relief device again closes.

Furthermore, a refrigerant relief device is known from Mahmoud Ghodbane, Ph.D., James A. Baker, William R. Hill, and Stephen O. Andersen, Ph.D., 'R-152a Mobile A/C with Directed Relief Safety System', pages 4 and 13, SAE 2003 Alternate Refrigerants Systems Symposium presentations 08/01/2003, retrieved on 2004-03-12 in the Internet: <URL:http://www.sae.org/altrefrigerant/presentations/presw-hill.pdf>). The relief device is provided in a refrigeration cycle for an automotive air conditioner using e.g. carbon dioxide or HFC-152a, which substance can have as serious adverse influence on occupants as refrigerant. In case of danger of e.g. serious damage to a component of the refrigeration cycle e.g. by aging or a collision accident, the relief device releases refrigerant to the outside of the vehicle compartment. The relief device is thus configured to eliminate the risk that occupants are suffocated by carbon dioxide emitted into the vehicle compartment, or the risk of occurrence of a fire by inflammable HFC-152a catching fire.

The relief device of JP 2002257047 A suffers from the problem that refrigerant may internally leak through the valve portion in normal use. The relief device as proposed by Ghodbane et al suffers from the problem that it does not operate when the electric system is faulty under abnormally high refrigerant pressure since the relief device operates in a manner interlocked with the detection by e.g. a collision sensor.

US-A-4,948,931 discloses a combined pressure cut-off and pressure relief valve for air conditioner compressors. The valve contains a switch controlling the compressor, and a pressure responsive means for opening a vent to vent the pressure. Both the switch operating means and the vent operating means include snap discs and a pin for piercing a diaphragm to open the relief vent.

US-A-5,153,396 discloses a high pressure relief valve/high pressure cut-off device for a compressor of an automotive air conditioning system. The valve contains a high pressure switch for controlling the compressor, and a force transmitting mechanism with a pressure sensing means. An integrated diaphragm either bursts in dependence from excessive pressure or is pierced by pins rupturing the diaphragm.

It is an object of the invention to provide a refrigerant relief device which is capable of operating reliably by a simple construction without permitting refrigerant leakages. This object is achieved by the features of claim 1.

The refrigerant in the refrigeration cycle normally is reliably isolated from the atmosphere by the thin film. However, when the pressure in the refrigeration cycle becomes abnormally high, the thin film-holder can no longer hold the thin film, but the thin film is displaced toward the second chamber and then is broken by the thin film-breaking section. Refrigerant then is released into the atmosphere to sharply reduce the pressure in the refrigeration cycle allowing to prevent components connected to the high pressure line from being ruptured. The thin film almost ideally seals between the first and second chambers, to completely prevent refrigerant leakages. Furthermore, the thin film only receives the pressure of the refrigerant in the refrigeration cycle and will be broken by the refrigerant pressure in a true emergency case and without the help of an externally generated, possible defect signal. Hence the refrigerant release device is reliable in operation, and simple in construction. The refrigerant relief device operates with high reliability and can be manufactured at low costs. Additionally, the thin film can be broken selectively by an externally generated triggering or breaking signal. While the refrigerant pressure remains within the normal range, for example, there might occur a risky condition when the refrigeration cycle is seriously damaged e.g. by a collision accident. This could cause a large refrigerant amount to flow into the vehicle compartment. If the refrigerant is harmful to occupants or is inflammable, occupants confined in the vehicle compartment would be exposed to severe period until they are rescued. Even when the refrigerant pressure is not higher than the set pressure but at the set pressure, the thin film-breaking section positively is operated at a desired time point to then release the refrigerant into the atmosphere.

Embodiments of the invention will be described with reference to the drawings.
- Fig. 1: is a central cross-section of a refrigerant relief device which is not part of the invention;
- Fig. 2: is a central cross-section of the refrigerant relief device of Fig.1, in a state in whicih abnormally high pressure is detected,
- Fig. 3: is a central cross-section of the refrigerant relief device of Fig.1, in a state after the detection of abnormally high pressure,
- Fig. 4: is a bottom view of the refrigerant relief device of Fig.1,
- Fig. 5A: is a side view of a piercing rod,
- Figs 5B to 5E: are bottom views showing different shapes of the tip of the piercing rod,
- Fig. 6: is a central cross-section of a refrigerant relief device which is not part of the invention, in a normal pressure state.
- Fig. 7: is a central cross-section of the refrigerant relief device of Fig. 6, in a state in which abnormally high pressure is detected,
- Fig. 8: is a central cross-section of the refrigerant relief device of Fig. 6, in a state after the detection of abnormally high pressure,
- Fig. 9A: is a plane view of the preferred embodiment of the refrigerant relief device,
- Fig. 9B: is a right side view of the refrigerant relief device,
- Fig. 10: is a central cross-section of the preferred embodiment, in a normal pressure state,
- Fig. 11: is a central cross-section of the preferred embodiment, in a state in which abnormally high pressure is detected,
- Fig. 12: is a central cross-section of the preferred embodiment, in a state after the detection of abnormally high pressure,
- Fig. 13: is a central cross-section of the preferred embodiment, in a state during energization,
- Fig. 14: is a central cross-section of the preferred embodiment, in a state after breakage of a metal thin film,
- Fig. 15: is a central cross-section of a second embodiment of the refrigerant relief device, in a normal pressure state,
- Fig. 16: is a central cross-section of a refrigerant relief device which is not part of the invention, in a state in which no pressure of refrigerant is applied thereto.

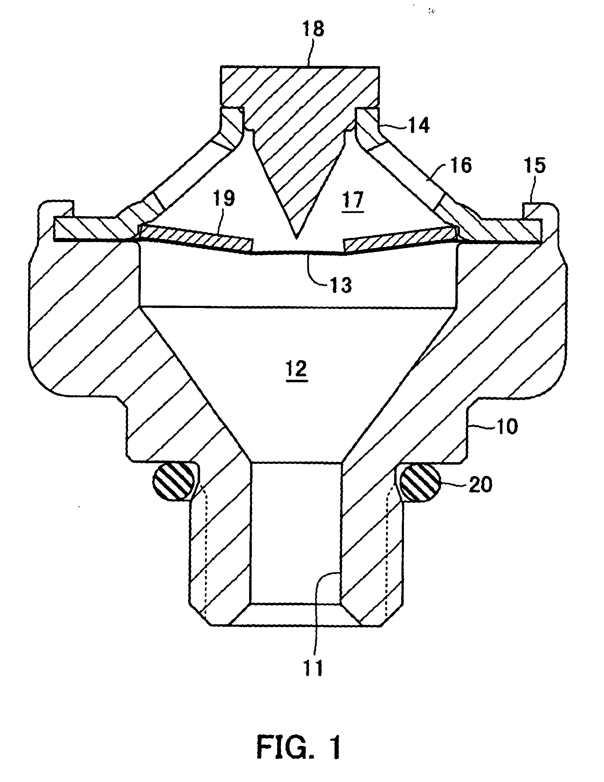

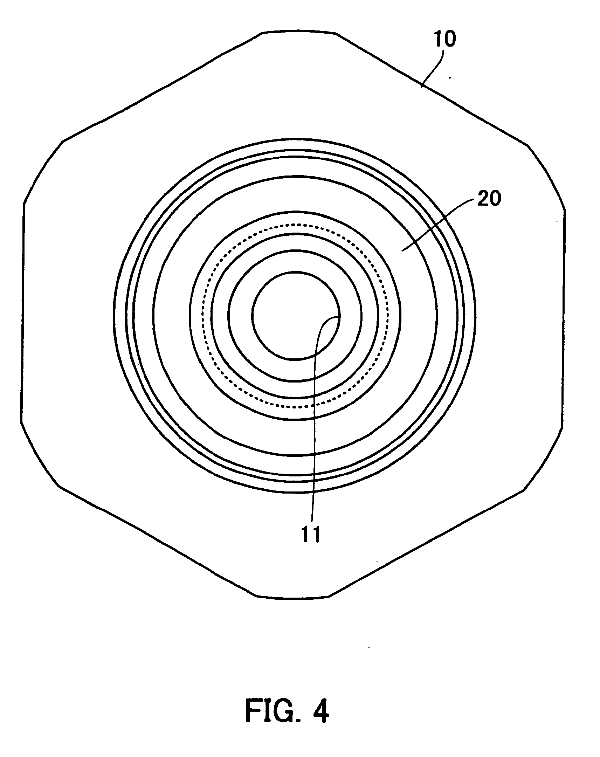

The refrigerant relief device in Figs 1-4 includes a body 10 forming an axial refrigerant-introducing passage 11 (a hollow cylindrical portion of the body 10) and an axial refrigerant-introducing chamber 12. The refrigerant-introducing passage 11 forms a joint for connection to piping of a refrigeration cycle. A part of the outer periphery of the hollow cylindrical portion has an external thread.

A metallic thin film 13 is disposed on an upper surface of the body 10. The thin film is brought into intimate contact with the upper surface such that the metal thin film 13 tightly closes the refrigerant-introducing chamber 12. Preferably the metal thin film 13 is welded to the upper surface of the body 10 outside the refrigerant-introducing chamber 12 e.g. to gastightly seal at the entire circumference of the upper opening.

A housing 14 is disposed above the body 10 sandwiching the metal thin film 13. An outer periphery of the housing 14 is rigidly fixed to the body 10 by inwardly swaging a hollow cylindrical portion 15 of the body 10. The housing 14 has a plurality of openings 16 and defines an open-to-atmosphere chamber 17above the metal thin film 13.

In the centre of the housing 14 a piercing rod 18 is rigidly fixed serving to selectively break the metal thin film 13. The piercing rod 18 has a thin film-breaking section with a pointed tip opposed to the metal thin film 13. Furthermore, a Belleville spring 19, serving as a thin film-holder is disposed in the open-to-atmosphere chamber 17, for holding and supporting the metal thin film 13 so as to define a certain amount of axial displacement of the film 13 by the refrigerant pressure before the refrigerant pressure reaches a set pressure. The Belleville spring 19 is an annular disc spring having a frustoconical shape with a central hole. A central portion of the Belleville spring 19, i.e. the edge of the central hole, slightly protrudes relative to the plane of the outer spring edge towards the refrigerant-introducing chamber 12. The outer spring periphery is retained by the housing 14. The Belleville spring 19 maintains its conical shape even when the metal thin film 13 intimately contacts the spring by the refrigerant pressure in the refrigerant-introducing passage 11 remaining below the set pressure. When the pressure reaches or exceeds the set pressure, the axial positional conical relationship between the central portion of the spring receiving the metal thin film 13 and the outer periphery retained by the housing 14 is inverted such that the conical Bellville spring 19 snaps to the other side.

An 0-ring 20 is fitted on a root portion of the hollow cylindrical portion so as to prevent refrigerant leakage when the refrigerant relief device is screwed to the piping of the refrigeration cycle.

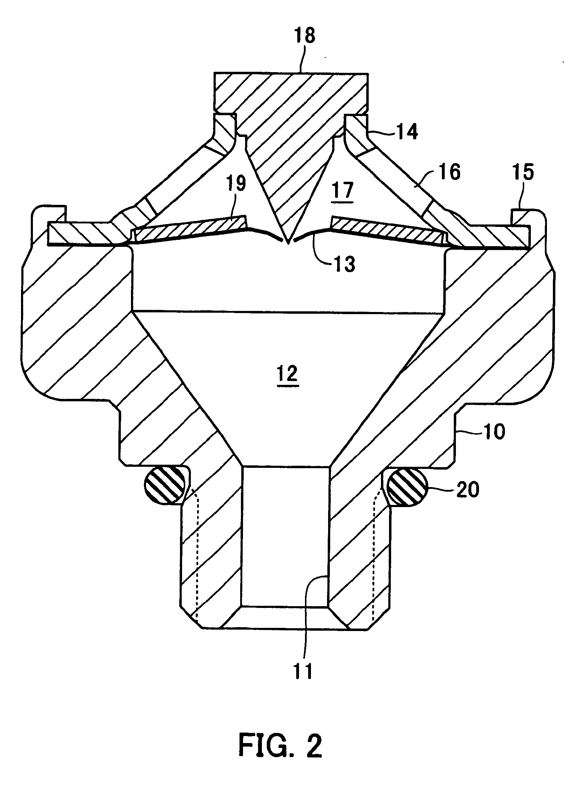

As long as the refrigerant pressure in the refrigeration cycle is within a normal range, the Belleville spring 19 remains in the state shown in Fig. 1 and holds the metal thin film 13 against the acting pressure away from the tip of the piercing rod 18. When the refrigerant pressure reaches or exceeds the set pressure, the Belleville spring 19 is inverted in shape (Fig. 2). The central portion of the metal thin film 13 is displaced upward with the central portion of the spring to a location higher than the position of the tip of the piercing rod 18. Then, the metal thin film 13 is pierced and broken by the tip of the piercing rod 18.

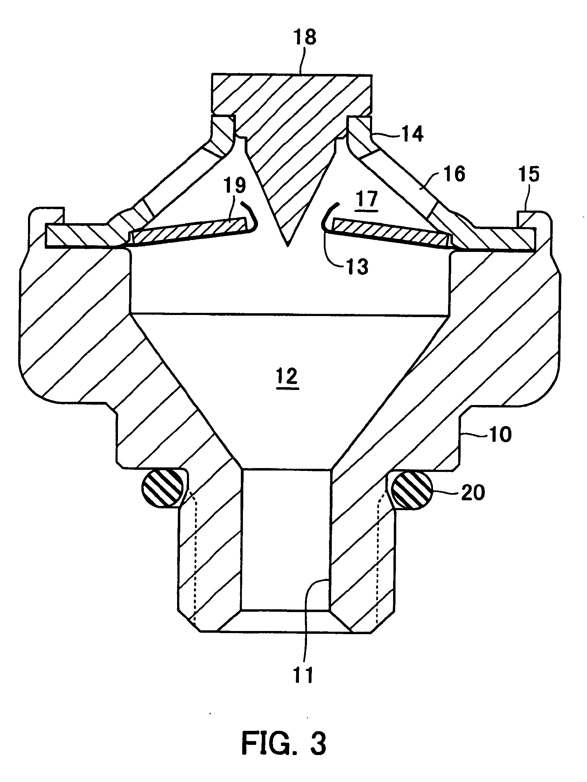

As shown in Fig. 3, the size of the hole broken into the metal thin film 13 then is increased by the flowing refrigerant. Refrigerant from the refrigeration cycle is released into the atmosphere through the then large hole and through the openings 16 of the housing 14. The refrigerant pressure in the refrigeration cycle suddenly decreases, preventing that components connected to in a highpressure line will break.

It is possible to accurately predetermine the set pressure at which the metal thin film 13 will be broken, without breaking the metal thin film 13. The set pressure can be accurately measured by attaching the refrigerant relief device without the piercing rod 18 to a pressure-measuring jig, and increasing the pressure in the refrigerant-introducing chamber 12 until the Belleville spring 19 inverts the shape. Then the respective pressure is read. The Belleville spring 19 then can be restored to its original state without damaging the metal thin film 13 by applying an external force to the spring through the hole into which the piercing rod 18 will be mounted later. After the accurate determination of the set pressure, the piercing rod 18 is mounted in the housing 14.

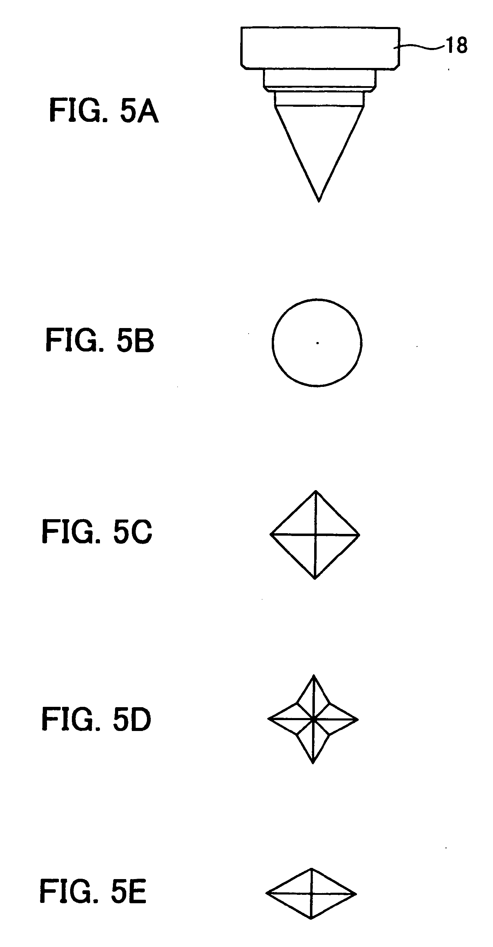

The piercing rod tip opposed to the metal thin film 13 is pointed so as to easily break the metal thin film 13 when the film 13 has been displaced far enough. The rod tip can have a conical shape, as shown in Figs. 5A and 5B. The contour of the tip can be a quadrangular pyramid (Fig. 5C), a star shape (Fig. 5D), and a spear tip-like shape (Fig. 5E). Especially, if the tip of the piercing rod 18 has portions (Figs. 5B and 5E) formed such that they have an acute angle in circumferential direction, the piercing rod 18 can easily pierce a hole through the thin metal film.

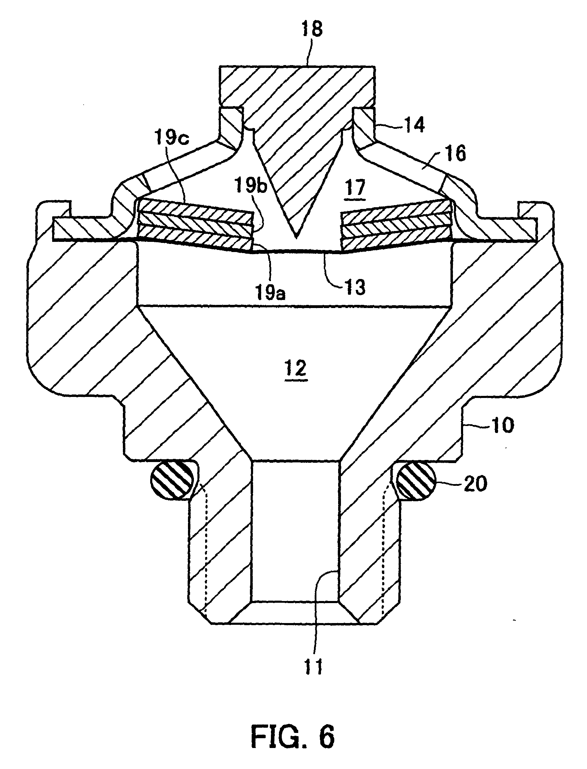

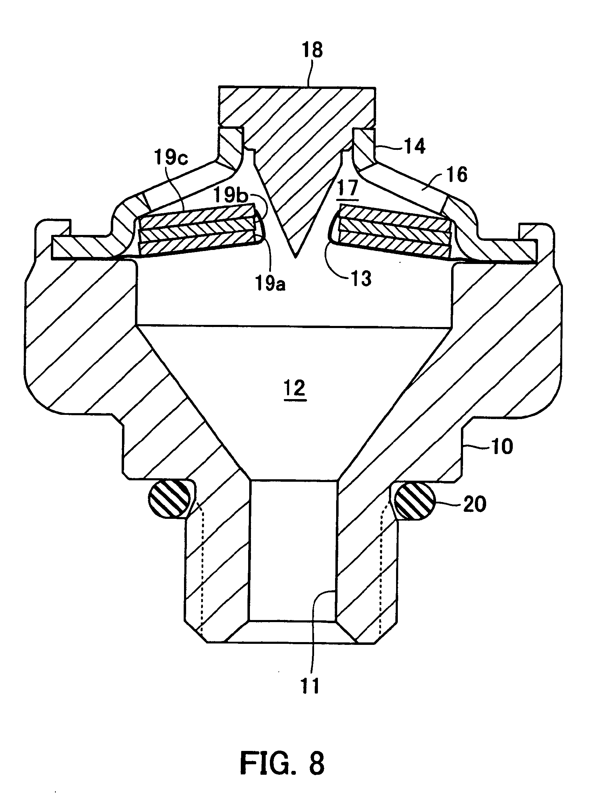

The refrigerant relief device of Figs 6-9 is distinguished from the device of Figs 1-4 in that the thin film-holder is formed by three e.g. equally dimensioned Belleville springs 19a, 19b, and 19c overlaid upon each other in a stack.

A plurality of types of refrigerant relief devices operating at different set pressures can be made by accordingly combining Belleville springs 19a, 19b, and 19c which need different loads for inverting the shape. Three Belleville springs 19a, 19b, and 19c are not limitative, but a combination of two or more than three disc Belleville springs as well is possible. The actual set pressure can be accurately measured in advance by a test as mentioned above.

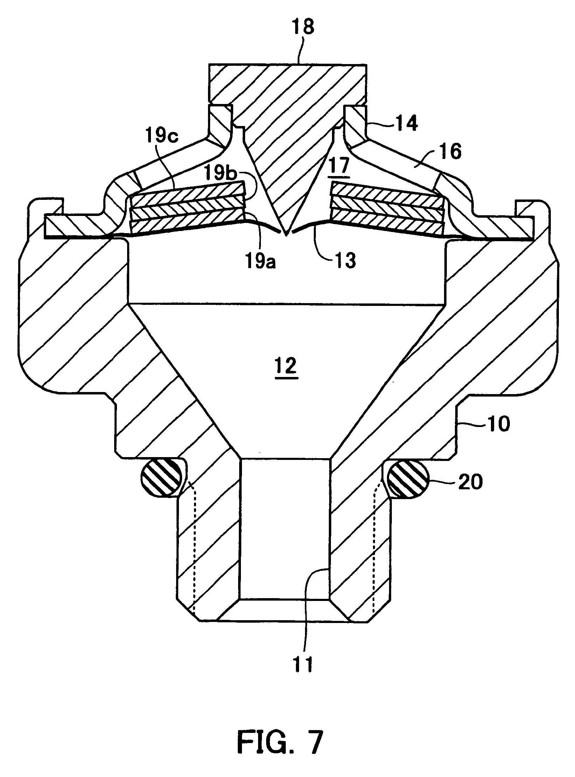

As long as the refrigerant pressure remains within a normal range, the Belleville springs 19a, 19b, and 19c are in a state shown in Fig. 6. When the refrigerant pressure exceeds the set pressure, the Belleville springs 19a, 19b, and 19c are inverted in shape (Fig. 7), and the thin film 13 is pierced and broken.

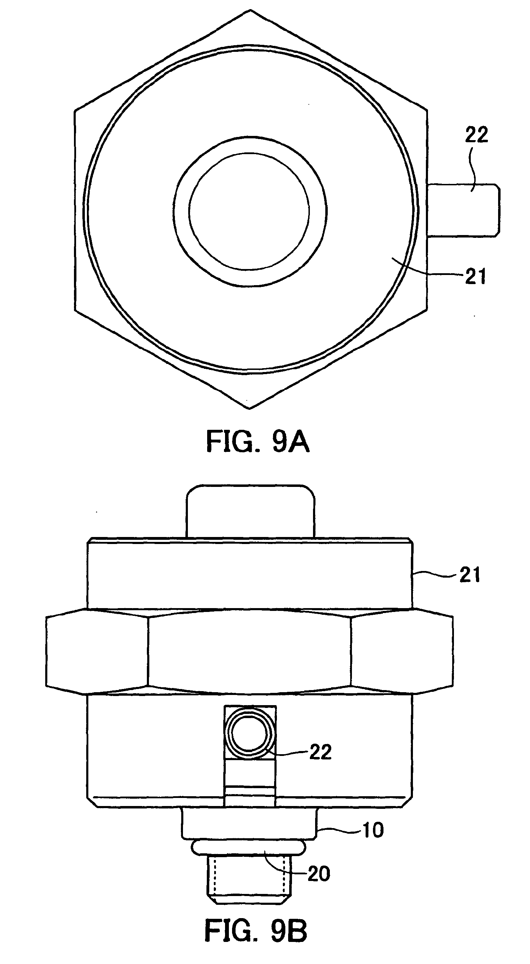

The refrigerant relief device of Figs 9A, 9B, 10-12 (preferred embodiment) is distinguished from the devices of Figs 1-4 and of Fig 6-9 in that the structure of the thin film-breaking section is modified. When the refrigerant pressure has reached or exceeded the set pressure, the thin film-breaking section is automatically operated by the refrigerant pressure. Even when the refrigerant pressure is not higher than the set pressure but at the set pressure, the thin film-breaking positively is operated at a desired time point to then release the refrigerant into the atmosphere.

In Figs. 9A and 9B, the refrigerant relief device comprises the body 10 forming a joint for connection to piping of the refrigeration cycle. A solenoid 21 is disposed above the body 10 and forms part of the thin film-breaking section. The solenoid 21 is provided with a conduit 22 configured to extend from a side thereof, for releasing refrigerant into the atmosphere. The outer periphery of solenoid 21 has the shape of nut, to facilitate joining the refrigerant relief device to the piping of the refrigeration cycle by screwing.

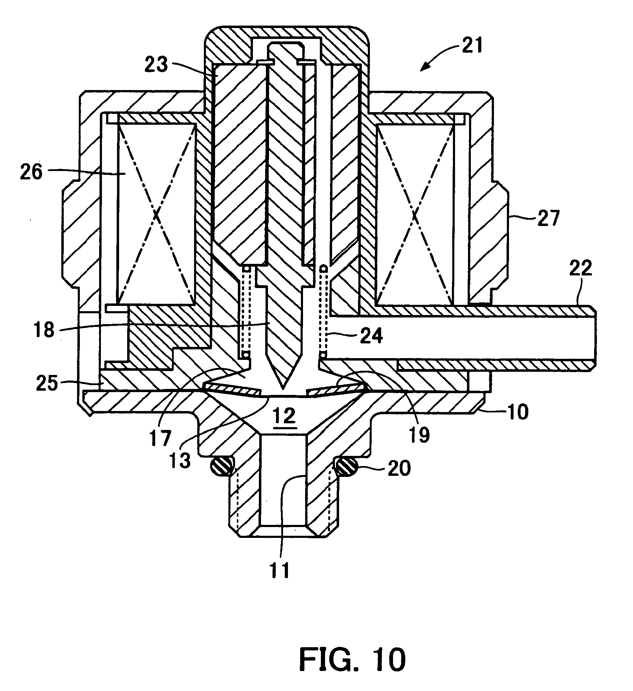

In Fig. 10 the piercing rod 18 is movable forward and backward in directions perpendicular to the plane of the metal thin film 13. The piercing rod 18 is rigidly fixed to a movable core 23 of the solenoid 21. The movable core 23 has an axial hole, and is urged by a spring 24 in a direction away from a fixed core 25. The fixed core 25 is disposed on the upper surface of the body 10 where the metal thin film 13 is welded. The piercing rod 18 and the spring 24 are received in a hole of the fixed core 25. The fixed core 25 has a lower end integrally formed with a flange portion protruding radially outward for forming a magnetic circuit. A horizontal hole communicates the open-to-atmosphere chamber 17 with the atmosphere. The Belleville spring 19 is disposed between the fixed core 25 and the metal thin film 13 for holding the metal thin film 13.

A coil 26 is disposed around the outer peripheries of the movable core 23 and the fixed core 25. A bobbin for the coil 26 has a container containing the movable core 23 and the fixed core 25, and the conduit 22 for releasing refrigerant into the atmosphere. The container and the conduit 22 being integrally formed with the bobbin e.g. by a resin. The refrigerant relief device is disposed e.g. in refrigerant piping in an engine room. If the location where the refrigerant relief device is disposed is not suitable for releasing refrigerant, a hose may be connected to the conduit 22, to thereby guide refrigerant to a suitable location. Outside the coil 26, a yoke 27 closing the magnetic circuit is disposed. A lower end of the yoke 27 is rigidly fixed to the body 10 by inwardly swaging.

A long as the pressure remains within a normal range, the Belleville spring 19 has the state shown in Fig. 10. The metal thin film 13 is held against the refrigerant pressure away from the tip of the piercing rod 18.

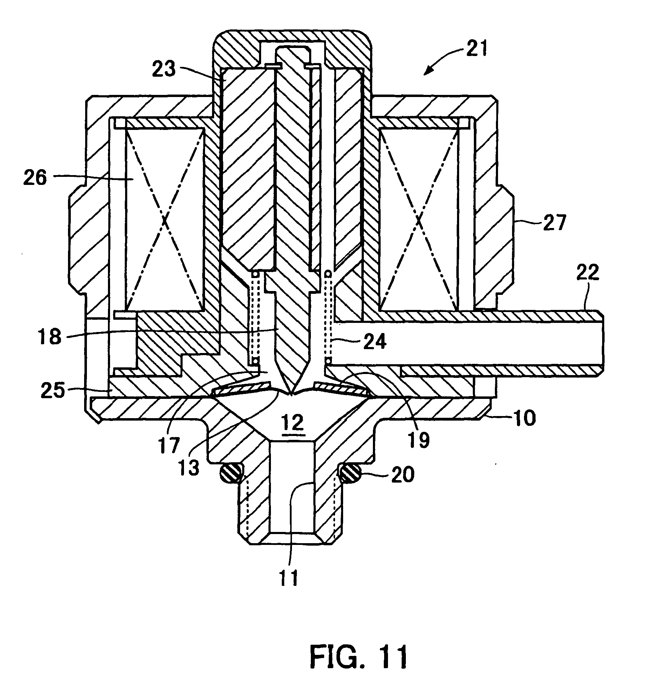

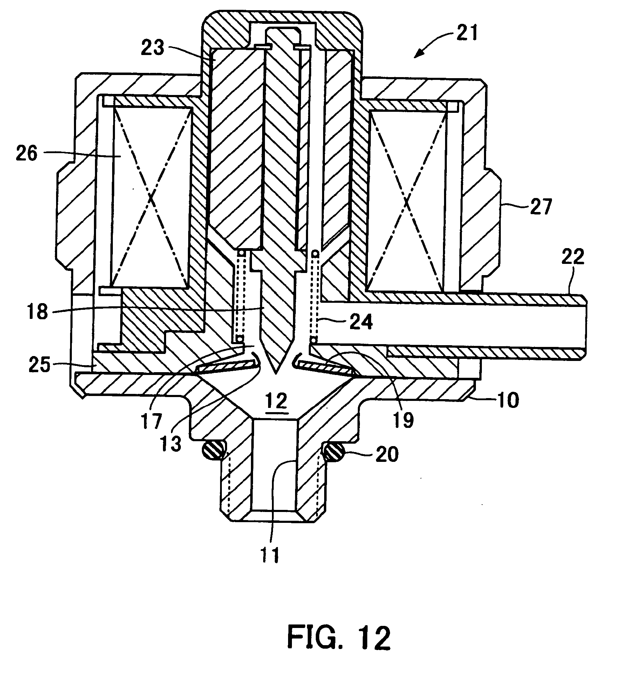

When the refrigerant pressure has reached or has become higher than the set pressure, the Belleville spring 19 is inverted in shape (Fig 11). The central portion of the metal thin film 13 is displaced upward to a location higher than the position of the tip of the piercing rod 18. Thereby, the metal thin film 13 is pierced and broken. The size of the hole formed in the film 13 is instantly increased by flowing refrigerant (Fig. 12), and refrigerant is released into the atmosphere via the hole increased in size, the open-to-atmosphere chamber 17, and the conduit 22.

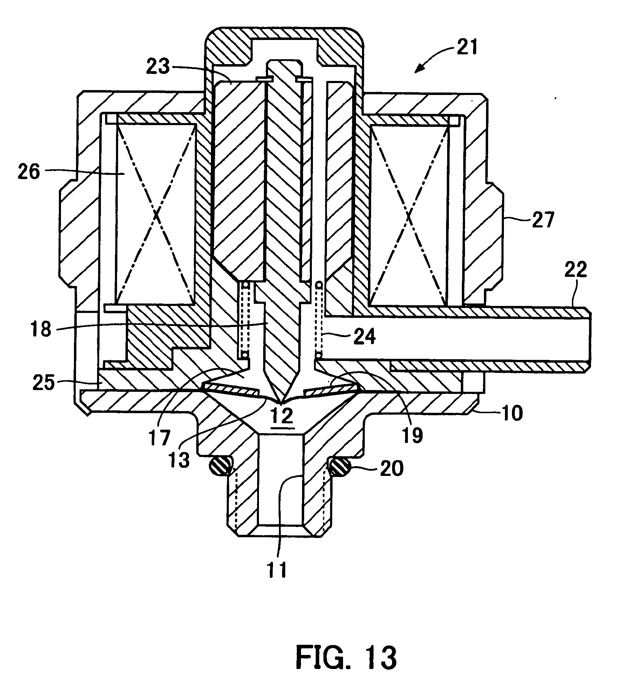

While the refrigerant pressure remains within the normal range, for example, there might occur a risky condition when the refrigeration cycle is seriously damaged e.g. by a collision accident. This could cause a large refrigerant amount to flow into the vehicle compartment. If the refrigerant is harmful to occupants or is inflammable, occupants confined in the vehicle compartment would be exposed to severe peril until they are rescued. In such a case, pulse current is supplied as an externally generated film breaking signal to the coil 26 e.g. for approximately 20 milliseconds (Fig. 13). Then, the movable core 23 is attracted against the urging force of the spring 24 by the fixed core 25. The piercing rod 18 fixed to the movable core 23 is moved toward the metal thin film 13. When the movable core 23 e.g. is fully attracted to the fixed core 25, the acute angle tip of the piercing rod 18 breaks through the metal thin film 13.

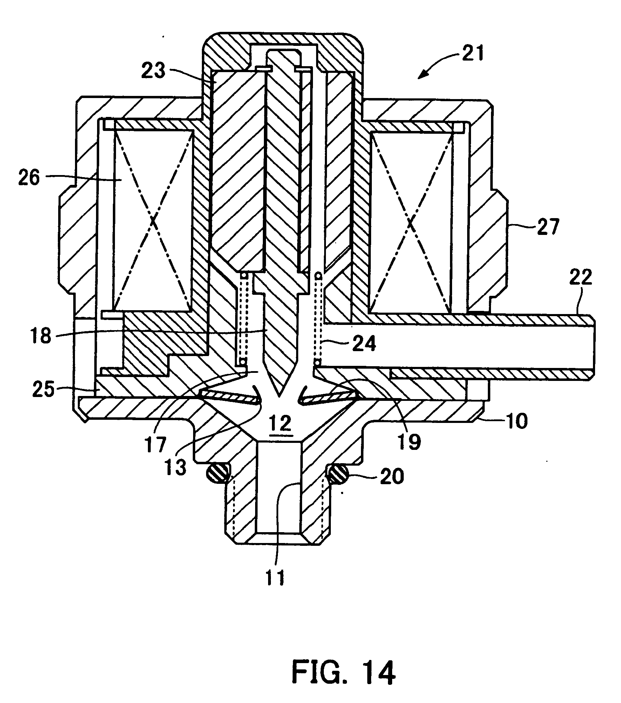

When the pulse current ceases, the movable core 23 is moved away from the fixed core 25 by the urging force of the spring 24. The piercing rod 18 is pushed back by refrigerant blowing through the broken metal thin film 13. After that, as shown in FIG. 14, the metal thin film 13 is further ruptured by the force of the refrigerant blow to increase the size of the hole. Refrigerant is instantly released into the atmosphere via the conduit 22. This prevents that a dangerously large amount of refrigerant will enter the vehicle compartment, and prevents occupants from being exposed to peril by emitted refrigerant.

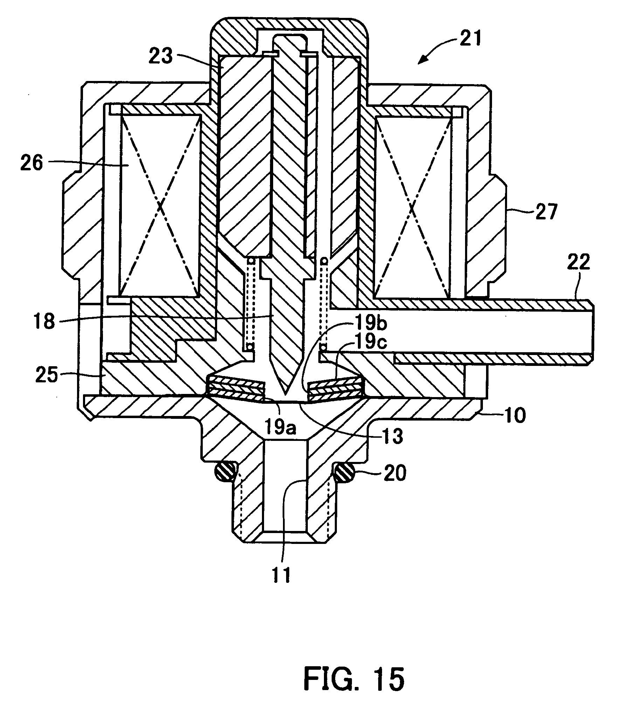

The refrigerant relief device in Fig. 15 (second embodiment) is distinguished from the preferred embodiment in that the thin film-holder is formed by a stack of e.g. three e.g. equally dimensioned Belleville springs 19a, 19b, and 19c which are overlaid upon each other. This allows to combine Belleville springs 19a, 19b, and 19c which have different loads for inverting the shape. It is possible to make a plurality of types of refrigerant relief devices operating at different set pressures.

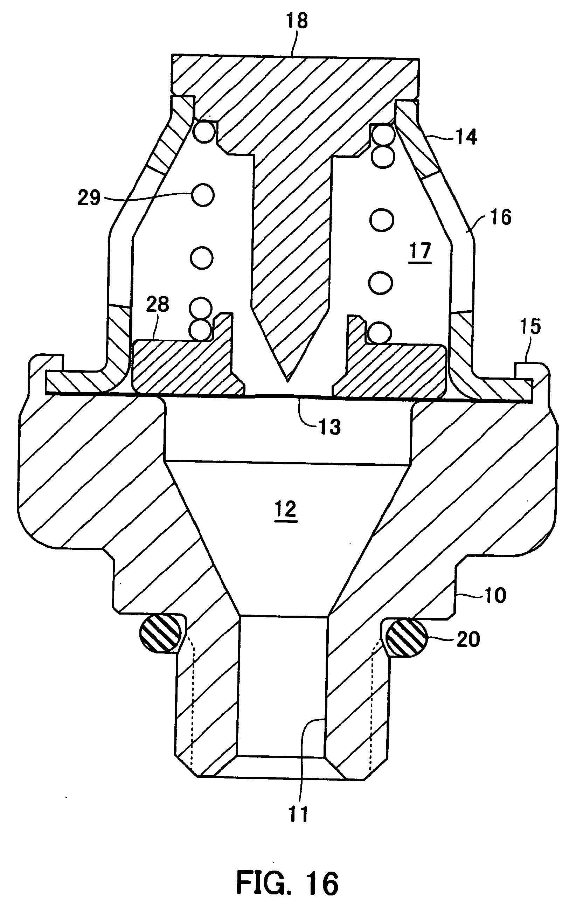

The refrigerant relief device of Fig. 16 is distinguished from the device of Figs 1-4 by a differently configured thin film-holder. The open-to-atmosphere chamber 17 in Fig. 16 contains a flat disc 28, which cannot be deformed axially, and which is in contact with the metal thin film 13. A spring 29 is disposed between the disc 28 and a root portion of the piercing rod 18. The thin film-holder is formed by the disc 28 and the spring 29.

The disc 28 has an outer diameter large enough to be placed on an upper surface of the body 10, with the metal thin film 13, in-between. The disc 28 can axially move along the inner wall of the housing 14 when the metal thin film 13 is displaced axially. The spring 29 has a spring force large enough to withstand normal refrigerant pressure.

The disc 28 has a central through hole in which the pointed tip of the piercing rod 18 is located. The axial position of the piercing rod 18 is adjusted such that the tip is located at a position to which the metal thin film 13 will become displaced e.g. when the refrigerant pressure becomes equal to the set pressure at which the refrigerant relief device should operate.

A soon as the refrigerant pressure becomes higher, the metal thin film 13 is displaced upward against the urging force of the spring 29. When the refrigerant pressure reaches or exceeds the set pressure which should be detected as an abnormally high pressure, the metal thin film 13 is brought into contact with the tip of the piercing rod 18. The thin film 13 will be damaged by the piercing rod 18. There e.g. occurs a brittle fracture in which the metal thin film 13 is cleaved from the damaged portion and the fracture rapidly proceeds. As a result, refrigerant flows through the broken portion into the atmosphere via the open-to-atmosphere chamber 17 and the openings 16.

## Claims

1. A refrigerant relief device for releasing abnormally high pressurised refrigerant from a refrigeration cycle of an automotive air condition into the atmosphere; comprising
a thin film (13) gastightly isolating a first chamber (12) having the refrigerant pressure in the refrigeration cycle from a second chamber (17) communicating with the atmosphere;
thin film-holding means (19) provided in the second chamber (17) for withstanding an amount of displacement of the thin film (13) up to a predetermined displacement amount against the refrigerant pressure until the refrigerant pressure reaches or exceeds a set pressure; and
a thin film-breaking section (18) operable at least when the refrigerant pressure reaches or exceeds the set pressure, **characterised in that** the film breaking section (18) is operated by an externally generated film breaking signal, that the thin film-breaking section (18) comprises a piercing rod (18) disposed in a manner movable forward and backward in a direction perpendicular to a plane of the thin film (13), that a pointed-shaped piercing rod tip is opposed to the thin film (13), and that a thrust-generating section operated by the film breaking signal is provided for generating a thrust for selectively moving the piercing rod (18) toward and through the thin film (19) independent from the displacement amount of the thin film (13).

2. The refrigerant relief device according to claim 1, **characterised in that** the thrust-generating section comprises a solenoid having a movable core (23) in the second chamber (17), that the piercing rod (18) is rigidly fixed to the movable core (23), that the movable core (23) is urged by an urging force in a direction away from a fixed core (25) which is disposed on the movable core (23) side of thin film (13), and that the film breaking signal is a current signal operating the solenoid to move the movable core (23) counter to the urging force.

3. The refrigerant relief device according to claim 2, **characterised in that** the film breaking signal is a temporarily generated pulse current.

4. The refrigerant relief device as in claim 1, **characterised in that** the film-breaking section automatically is operated by the refrigerant pressure when the displacement of the thin film reaches or exceeds the predetermined displacement amount to break the thin film (13).

5. The refrigerant relief device according to claim 1, **characterised in that** the piercing rod (18) in absence of the film breaking signal is fixed such that the tip is positioned closer to the first chamber (12) than to a position to which the thin film is displaced when the refrigerant pressure reaches or exceeds the set pressure.

6. The refrigerant relief device according to claim 1, **characterised in that** the thin film-holding means comprises at least one Bellevue spring (19, 19a, 19b, 19c) in which the axial displaced positional relationship between a central portion supporting the thin film (13) and an outer periphery whose axial motion is restricted is inverted by the thin film (13), when the refrigerant pressure reaches or exceeds the set pressure.

## Patentansprüche

1. Kältemittet-Ablassvorrichtung zum Ablassen von unter abnormal hohem Druck stehenden Kältemittel aus einem Kühlkreis einer Automobil-Klimaanlage in die Atmosphäre, aufweisend
einen Dünnfilm (13), der eine erste, den Kältemitteldruck in dem Kühlkreis enthaltende Kammer (12) von einer zweiten, mit der Atmosphäre kommunizierenden Kammer (17) gasdicht isoliert;
Dünnfilm-Haltemittel (19), die in der zweiten Kammer (17) vorgesehen sind und einem Ausmaß einer Verlagerung des Dünnfilms (13) bis zu einem vorbestimmten Verlagerungsausmaß und gegen den Kältemitteldruck widerstehen, bis der Kältemitteldruck einen gesetzten Druck erreicht oder überschreitet; und
eine Dünnfilm-Aufbrechsektion (18), die zumindest betätigbar ist, wenn der Kältemitteldruck den gesetzten Druck erreicht oder überschreitet, **dadurch gekennzeichnet, dass** die Dünnfilm-Aufbrechsektion (18) durch ein extern erzeugtes Filmbrechsignal betätigt wird, dass die Dünnfilm-Aufbrechsektion (18) einen Durchdringstab aufweist, der so angeordnet ist, dass er in einer Richtung senkrecht zu einer Ebene des Dünnfilms (13) vorwärts und rückwärts bewegbar ist, dass dem Dünnfilm (13) eine spitzenförmige Durchdringspitze des Durchdringstabes gegenüberliegt, und dass eine unabhängig von dem Verlagerungsausmaß des Dünnfilms (13) durch das Filmbrechsignal betätigte, einen Schub zum wahlweisen Bewegen des Durchdringstabs zu und durch den Dünnfilm (13) generierende Sektion vorgesehen ist.

2. Kältemittel-Ablassvorrichtung gemäß Anspruch 1, **dadurch gekennzeichnet, dass** die den Schub generierende Sektion einen Magneten aufweist, der in der zweiten Kammer (17) einen beweglichen Kern (23) besitzt, dass der Durchdringstab starr an dem beweglichen Kern (23) fixiert ist, dass der bewegliche Kern ((23) durch eine Beaufschlagungskraft in einer Richtung weg von einem fixierten Kern (25) belastet ist, welcher an der Seite des beweglichen Kerns (23) des Dünnfilms (13) angeordnet ist, und dass das Filmbrechsignal ein Stromsignal ist, das den Magneten so betätigt, dass dieser den beweglichen Kern (23) gegen die Beaufschlagungskraft bewegt.

3. Kältemittel-Ablassvorrichtung gemäß Anspruch 2, **dadurch gekennzeichnet, dass** das Filmbrechsignal ein temporär erzeugter Pulsstrom ist.

4. Kältemittel-Ablassvorrichtung gemäß Anspruch 1, **dadurch gekennzeichnet, dass** die Filmbrechsektion durch den Kältemitteldruck automatisch betätigt wird, wenn die Verlagerung des Dünnfilms das vorbestimmte Verlagerungsausmaß erreicht oder überschreitet, um dann den Dünnfilm (13) zu brechen.

5. Kältemittel-Ablassvorrichtung gemäß Anspruch 1, **dadurch gekennzeichnet, dass** in Abwesenheit des Filmbrechsignals der Durchdringstab so fixiert ist, dass die Durchdringspitze näher bei der ersten Kammer (12) positioniert ist als bei einer Position, zu welcher der Dünnfilm verlagert wird, wenn der Kältemitteldruck den gesetzten Druck erreicht oder überschreitet.

6. Kältemittel-Ablassvorrichtung gemäß Anspruch 1, **dadurch gekennzeichnet, dass** die den Dünnfilm haltenden Mittel zumindest eine Bellevue-Feder (19, 19a, 19b, 19c) aufweisen, in welcher die axial verlagerte Positionsrelation zwischen einem zentralen Bereich, der den Dünnfilm (13) abstützt, und einer äußeren Peripherie, deren axiale Beweglichkeit beschränkt ist, durch den Dünnfilm (13) umgekehrt wird, wenn der Kältemitteldruck den gesetzten Druck erreicht oder überschreitet.

## Revendications

1. Dispositif de décharge de réfrigérant pour décharger un réfrigérant se trouvant à une pression anormalement haute, venant d'un cycle de réfrigérant d'un conditionnement d'air pour automobile, dans l'atmosphère ; comprenant
un film (13) mince, isolant de façon étanche aux gaz une première chambre (12), dans laquelle règne la pression de réfrigérant dans le cycle de réfrigérant, vis-à-vis d'une deuxième chambre (17) communiquant avec l'atmosphère ;
des moyens de maintien de film mince (19), prévus dans la deuxième chambre (17) pour résister à une quantité de déplacement de film mince (13) jusqu'à une quantité de déplacement prédéterminée face à la pression de réfrigérant, jusqu'à ce que la pression de réfrigérant atteigne ou dépasse une pression réglée ; et
une section de rupture de film mince (18), susceptible de fonctionner au moins lorsque la pression de réfrigérant atteint ou dépasse la pression de consigne, **caractérisé en ce que** la section de rupture de film (18) est actionnée par un signal de rupture de film généré en externe, **en ce que** la section de rupture de film (18) comprend une tige de percement (18), disposée de manière déplaçable vers l'avant et
l'arrière dans une direction perpendiculaire à un plan du film mince (13), **en ce qu'**une extrémité de tige de percement en forme de pointe est opposé au film (13) mince, et **en ce qu'**une section de génération de poussée, actionnée par le signal de rupture de film, est prévue pour générer une poussée pour sélectivement déplacer la tige de percement (18) vers et à travers le film (19) mince, indépendamment de la quantité de déplacement du film (13) mince.

2. Dispositif de décharge de réfrigérant selon la revendication 1, **caractérisé en ce que** la section génératrice de poussée comprend un solénoïde, ayant un noyau (23) mobile placé dans la deuxième chambre (17), **en ce que** la tige de percement (18) est fixée rigidement au noyau mobile (23), **en ce que** le noyau mobile (23) est sollicité par une force de sollicitation, dans une direction d'écartement vis-à-vis d'un noyau fixe (25) disposé sur le côté du noyau mobile (23) du film (13) mince, et **en ce que** le signal de rupture de film est un signal se présentant sous la forme d'un courant, actionnant le solénoïde pour déplacer le noyau mobile (23) à l'encontre de la force de sollicitation.

3. Dispositif de décharge de réfrigérant selon la revendication 2, **caractérisé en ce que** le signal de rupture de film est un courant pulsé, généré temporairement.

4. Dispositif de décharge de réfrigérant selon la revendication 1, **caractérisé en ce que** la section de rupture de film est automatiquement actionnée par la pression de réfrigérant lorsque le déplacement du film mince atteint ou dépasse la quantité de déplacement prédéterminée pour rompre le film (13) mince.

5. Dispositif de décharge de réfrigérant selon la revendication 1, **caractérisé en ce que** la tige de percement (18), en l'absence du signal de rupture de film, est fixée de manière que l'extrémité soit positionnée plus près de la première chambre (12) qu'une position à laquelle le film mince est déplacé, lorsque la pression de réfrigérant atteint ou dépasse la pression réglée.

6. Dispositif de décharge de réfrigérant selon la revendication 1, **caractérisé en ce que** les moyens de maintien de film mince comprennent au moins un ressort Belleville (19, 19a, 19b, 19c), dans lequel la relation de position en déplacement, axial entre une partie centrale supportant le film (13) mince et une périphérie extérieure dont le déplacement axial est restreint, est inversée par le film mince (13), lorsque la pression de réfrigérant atteint ou dépasse la pression réglée.
